(19) Europäisches Patentamt
European Patent Office
Office européen des brevets

(11) **EP 2 516 233 B2**

(12) **NEW EUROPEAN PATENT SPECIFICATION**
After opposition procedure

(45) Date of publication and mention
of the opposition decision:
**05.07.2017   Bulletin 2017/27**

(45) Mention of the grant of the patent:
**22.01.2014   Bulletin 2014/04**

(21) Application number: **10814708.3**

(22) Date of filing: **23.12.2010**

(51) Int Cl.:
**B60T 15/48** (2006.01)      **B60T 17/00** (2006.01)
**B60T 17/02** (2006.01)

(86) International application number:
**PCT/IB2010/056050**

(87) International publication number:
**WO 2011/077404 (30.06.2011 Gazette 2011/26)**

(54) **Device and method for handling a pneumatic braking system compressor, in particular for industrial vehicles**

Vorrichtung und Verfahren zur Steuerung des Kompressors eines pneumatischen Bremssystems, insbesondere für Lastkraftwagen

Dispositif et procédé pour la gestion d'un compresseur d'un système de freinage pneumatique, en particulier pour des véhicules utilitaires

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2009   EP 09425538**
**24.12.2009   EP 09425537**

(43) Date of publication of application:
**31.10.2012   Bulletin 2012/44**

(73) Proprietor: **Iveco S.p.A.**
**10156 Torino (IT)**

(72) Inventors:
• **GENNARI, Paolo**
**I-10137 Torino (IT)**

• **PRINA, Claudio**
**I-13900 Biella (IT)**
• **BEZZE, Massimo**
**I-10080 S. Benigno Canavese (IT)**
• **CASSOLA, Riccardo**
**I-15048 Valenza (IT)**

(74) Representative: **Franzolin, Luigi et al**
**Studio Torta S.p.A.**
**Via Viotti, 9**
**10121 Torino (IT)**

(56) References cited:
WO-A1-02/096732        WO-A1-2006/071170
WO-A1-2010/051868      DE-A1- 3 504 884
DE-A1- 19 515 895      DE-A1-102004 059 834
DE-A1-102007 032 970   US-A1- 2007 199 444

EP 2 516 233 B2

**Description**

**Application field of the invention**

The present invention relates to the field of devices and methods for handling a pneumatic braking system compressor, in particular for industrial vehicles comprising an at least partially pneumatic braking system.

Description of the prior art

Industrial vehicles are provided with a pneumatic braking system. This results in the air being kept pressurized in the braking system as long as the vehicle braking occurs, when the air is ejected. In order to restore the pressure level prior to braking, compressed air is accumulated in an appropriate tank.

On the one hand, the tanks always start being filled when predetermined pressure thresholds are reached, also by withdrawing power to the engine, thus affecting fuel consumption. Since preparing the system to the recharging of the compressed air tanks takes from 10 to 20 seconds, it is not possible to synchronize the beginning of the recharging with a condition of low driving torque.

On the other hand, the air stored in the tank, and thus in the braking system, is to be deprived from the condensation which is formed therein to avoid the braking system performance from deteriorating. For this reason, a drying device is provided, which dehumidifies the intake air. By withdrawing compressed air from the braking system, the condensation accumulated in the provided cartridge is removed. Since the actual humidity value of the intake air is not known, the frequency of compressed air withdrawal for regenerating the cartridge corresponds to the case wherein such value is 100% (worst case). Said functioning is not efficient.

Methods are known which are based on the analysis of the slope of a road section to be travelled. US2008206070 describes a method for handling the compressor which forces the compressor activation in case of pressure threshold very close to each other, when the vehicle is travelling on a downhill road. Such frequent activations tend to compromise the efficiency of the compressor itself, above all because the thresholds are not equidistant.

WO2009/010199 refers to the prediction of the so-called overrun conditions, only on the basis of information of altimetric type about the road. Moreover, it does not consider the hypothesis of fractionating the recharging of the compressed air tank.

WO 2006 071170 discloses a method of controlling the operation of the compressor by position identification means to establish a pressure level adapted to an expected air consumption.

None of the aforesaid documents considers a fundamental aspect in handling the compressor activation for pneumatic braking systems, namely the preparation of the compressor, which may require several seconds, determining the inefficiency of the aforesaid methods.

Summary of the invention

Therefore the aim of the present invention is to indicate a more efficient method for handling a pneumatic braking system compressor and dryer, in particular for industrial vehicles.

It is the object of the present invention a method of handling a pneumatic braking system compressor, in particular for industrial vehicles, in accordance with claim 1.

It is a particular object of the present invention a method of handling a pneumatic braking system compressor, in particular for industrial vehicles, as described in greater detail in the dependent claims, which form an integral part of the present invention.

It is a further object of the present invention a device for handling a pneumatic braking system compressor, comprising means for carrying out the aforesaid method and means for receiving the information needed for carrying out the aforesaid method.

Thus, according to the present invention, a technical effect is obtained which anticipates the preparation of the compressor in an efficient way with respect to the activation of the compressor itself.

Advantageously, the preparation of the compressor is performed in relation to the information on the current pressure of the compressed air inside the tank, namely independently from road characteristics and weather and road conditions, while the compressor activation is determined by the aforementioned road, road and weather conditions.

The handling of the compressor preparation and activation should be synergic, since once the compressor is ready, as soon as the required torque is lower than a predetermined threshold in a predetermined time, the compressor can be immediately activated without wasting further time.

The compressor activation is advantageously handled by means of a priority evaluated in terms of a time delay before the compressor activation, following its corresponding preparation.

According to a preferred alternative embodiment of the invention, such delay is a function proportional to the braking time and inversely proportional to the current pressure measured in the tank.

According to a further alternative embodiment, when suck delay is equal to zero, the compressor is activated, independently from the torque required to the engine. Moreover, since not only the altimetric conditions of the road are considered, but also the horizontal and the vertical signage, together with an estimation of the friction coefficient of the tyres and of weather and traffic conditions, it is possible to obtain a better approximate estimation of the interval of time wherein the torque required to the engine is low, and, at the same time, an estimation of the use of the braking system. According to another aspect of the invention, the concept of fractionating the recharging of the compressed air tank is applied also to the regeneration of the dryer cartridge. A further object of the present invention is a method of handling the regeneration of a drying device of a pneumatic braking system, in particular for industrial vehicles, having an at least partially pneumatic braking system, the system comprising

- a compressed air accumulation tank,
- a corresponding compressor and a drying device,

the method comprising the following steps:

- determination of a current humidity level relating to the drying device,
- definition of humidity thresholds between minimum and maximum humidity, preferably being equidistant between each other,
- calculation of a regeneration priority as a function proportional to the current humidity and inversely proportional to the current pressure,
- starting of a partial regeneration if said priority exceeds a predetermined threshold.

In particular, a preferred alternative embodiment of the handling method of the regeneration process of the drying device comprises the following steps:

- acquisition of information relating to a route to be travelled,
- calculation of a future interval of time wherein a driving torque lower than a predetermined threshold is required and calculation of a remaining time before the beginning of said interval of time,
- determination of a current humidity level relating to the drying device,
- definition of humidity thresholds between minimum and maximum humidity, preferably being equidistant between each other,
- verification that said remaining time is higher than a time necessary to realize a regeneration fraction of the drying device,
- calculation of a regeneration priority as a function proportional to the current humidity and inversely proportional to the current pressure,
- starting of a partial regeneration if said priority exceeds a predetermined threshold.

Brief description of the Figures

Further purposes and advantages of the present invention will become clear from the following detailed description of a preferred embodiment (and its alternative embodiments) and the drawings that are attached hereto, which are merely illustrative and non-limitative, in which:

figure 1 shows a flow chart defining an example of method in accordance with the present invention,
figure 2 shows a scheme of a portion of the method based on information relating to the altimetric trend of a route,
figure 3 shows a preferred model for anticipating the vehicle's behaviour before the following braking,
figure 4 shows a flow chart for assisting the calculation of a vehicle braking time, for a speed variation determined by road conditions, and for assisting the calculation of a remaining time before the vehicle starts braking; said time defining the input of the flow chart of figure 1,
figure 5 shows a psychometric chart.

In the figures the same reference numbers and letters identify the same elements or components.

Detailed description of preferred embodiments of the invention

The control system object of the present invention comprises an electric control unit working during the so-called "auto-routing" performed by satellite navigation systems, namely by radio-navigation systems, on a three-dimensional digital map, already available, and during the navigation along a set route to reach a destination.

The localization parameters that are used are latitude and longitude.

While the vehicle is running, the control system object of the invention, by interacting with onboard navigation systems, estimates the features of an as-long-as-possible section of the route that the vehicle is about to travel. The main road information that is used is the one necessary to foresee a braking condition instead of a traction condition. In particular, the road information comprises: altimetric variations, changes of direction, crossroads where decelerating or stopping is necessary, bends, switchback curves, uphill/downhill slopes and corresponding positions.

The control system object of the invention receives information on road conditions from the navigation system and from a possible radio receiver and thus implements the method comprising the following steps:

- acquisition of information relating to a route to be travelled,
- calculation of an interval of time Tlowtorque wherein a driving torque lower than a predetermined threshold ETth is required,
- calculation of a remaining time Trem before the beginning of said interval of time Tlowtorque,
- definition of pressure thresholds between a minimum pressure Pmin and a maximum pressure Pmax,
- when a current pressure Pa of the compressed air contained in the accumulation tank is comprised between the two aforesaid pressure thresholds, compressor preparation is started in relation to the two thresholds,
- if the preparation to the compressor activation is started, calculation of the delay time before compressor starting.

Thus Tlowtorque has to be intended as a braking time Tb plus immediately subsequent intervals of time, before and/or after the braking wherein the torque required to the engine is lower than a threshold ETth.

Consider for example the case when the road signage imposes a speed reduction and therefore the driving torque is lower than said predetermined threshold, thus Tlowtorque comprises, in addition to the braking time, also the time before and/or after the braking wherein the driving torque required to the engine is lower than the threshold ETth. The calculation of Trem is crucial for determining the compressor preparation.

Indeed, if Trem is not considered, as in the documents of the prior art, the compressor may be activated when Tlowtorque has already passed.

According to what was described above, two synergic effects are obtained: on the one hand, the charging of the tank is evaluated according to pressure thresholds, without activating the compressor only because the vehicle is travelling on a short downhill road, as showed in US2008206070; on the other hand, when the preparation to compressor activation is accomplished, the actual starting of the compressor is actuated according to a priority actuated in terms of compressor starting delay.

Thus, as it will be explained in the following, if the tank recharging is not urgent, see step 9, the system waits for the beginning of Tlowtorque, otherwise the compressor is immediately started.

As it will be showed in the following, the activation of the compressor preparation procedure may be handled by means of a look-up table with predetermined threshold and delay values.

According to a further alternative embodiment of the system, the compressor is activated after the Delay interval of time has passed, and after the verification that the torque required to the engine is actually below the predetermined threshold ETth.

When, on the contrary, the current pressure is lower than another threshold, than Delay is forced to be equal to zero and the compressor is immediately activated, excluding the verification of the required torque.

In other terms, if the stored air is estimated to be sufficient to cope with the next braking events, then the compressor is immediately started, even if the torque is not lower than ETth.

The Delay interval of time may be calculated as a function being:

- proportional to Tb, namely to the braking time, which, in its turn, is proportional to the air consumption, and also being
- inversely proportional to the current pressure Pa.

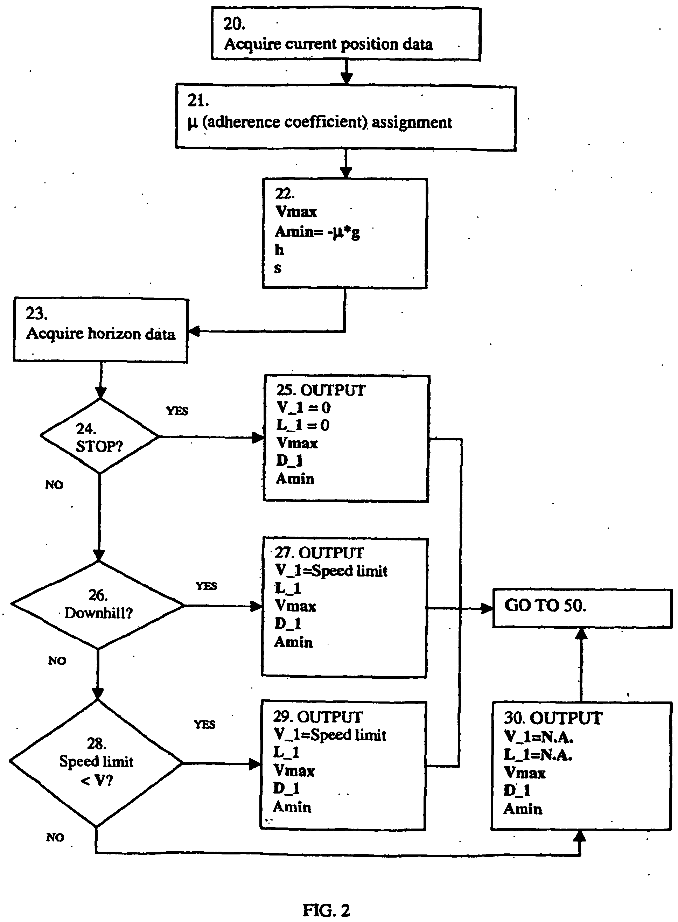

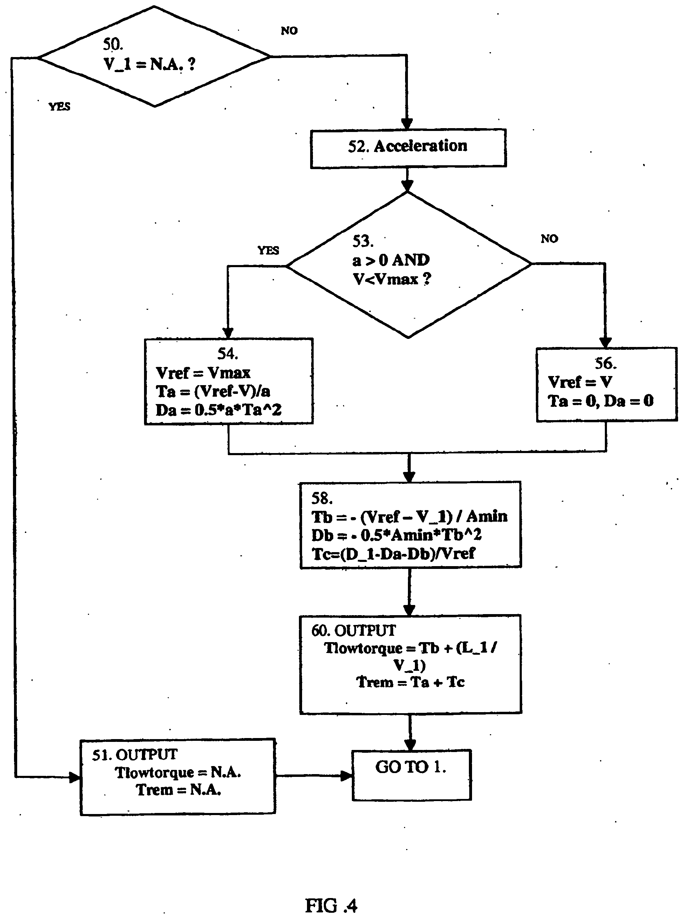

The estimated value for Trem, time remaining before the beginning of next braking, and for Tlowtorque, duration of the braking, is obtained by means of the flow charts described by means of Figg. 2 and 4.

A possible set of pieces of information provided by the radio-navigator, useful to the evaluation of Tlowtorque and Trem time are the following:

- variation of length, slope, inclination and bending of a road section,
- variation of road type: urban/extra-urban/highway with particular reference to:

    ◦ possible changes of direction,
    ◦ signage, with particular reference to warning signs, signs giving orders, yield signs, prohibition signs and horizontal signage,
∘ presence of traffic lights, crossroads, crossings of various nature (pedestrian/rail/cycle lane crossings),

- traffic information, road conditions, weather information.

In general, all information which may determine a vehicle speed variation is useful.

Information on traffic and road conditions may be made available in various manners, i.e. via DAB (Digital Audio Broadcasting) or via a data/telephone connection such as GPRS, HSDPA, etc.

Weather information may be obtained via DAB or GPRS/HSDPA, or by means of onboard instruments.

Said control unit, as will be described in detail below, may be advantageously connected to the vehicle control unit(s) governing vehicle functions, such as for example the gearbox, particularly if automatic or robotized, the engine, the brakes comprising, for example, the ABS or EBS system, the hydraulic retarder, the stability control (ESP), the direction indicators, etc.

According to a first aspect of the invention, the inhibition of the compressor activation is appropriate when the vehicle needs to cope with an uphill slope to avoid subtracting driving torque from vehicle movement.

It is worth masking the most of a downhill slope, whose travelling time should be considered in the calculation of Tlowtorque, for recharging the compressed air tank even when the air tank pressure is not critically low, but it is even more worth anticipating the operation of compressor preparation before the starting of a downhill slope. According to a further aspect of the present invention, said control unit estimates the duration of next braking events of the vehicle in terms of time Tlowtorque wherein a low driving torque is required.

Furthermore, said control unit calculates the remaining time Trem, from the instant of calculation before the beginning of Tlowtorque. More precisely, since Tlowtorque includes also the time wherein the vehicle speed is constant and anyway the torque is lower than said predetermined threshold, Trem includes intervals of time preceding Tlowtorque wherein the required torque is higher than said predetermined threshold. Advantageously, the calculation of Trem is useful for the system preparation to the compressed air tank recharging, preparation that may last between 10 and 20 seconds in relation to the type of the used compressor.

Said amount of air needed to cope with one or more next braking events may be advantageously expressed in terms of pressure in the compressed air accumulation tank.

Furthermore, said control unit controls the activation of the compressor considering the sections, included in said route, in which recharging the compressed air tank is most advantageous and those in which recharging the compressed air tank is least advantageous.

Thus the control unit prepares the system for recharging the compressed air tanks, in relation to the following physical magnitudes:

- current pressure Pa inside the tank compared with Pmax and Pmin,
- Tlowtorque/Trem,

once the system is prepared to the recharging, the control unit controls the compressor in relation to an estimated higher/lower opportunity to activate the compressor in relation to the driving torque actually required to the engine for moving the vehicle.

According to a preferred embodiment of the invention, for example, by means of a look-up table, compressor activation may be fractioned so as to prevent vehicle performance from deteriorating, while ensuring a sufficient amount of stored air to cope with braking events.

According to another point of view, controlling the - compressor according to said magnitudes may equivalently correspond to controlling the starting/stopping of the compressor by means of several functions/procedures executable in parallel, preferably reciprocally in OR and in AND providing that the current pressure Pa does not exceed the maximum allowable pressure Pmax (Pa<Pmax) and is not lower than the minimum allowable pressure Pmin (Pa>Pmin).

Trem and Tlowtorque calculation may consider at least one of the following speed variations, imposed by the route set for the navigator:

- a traffic condition variation,
- a road conformation variation,
- the approaching of a crossroad, a traffic light, a level crossing, etc.,

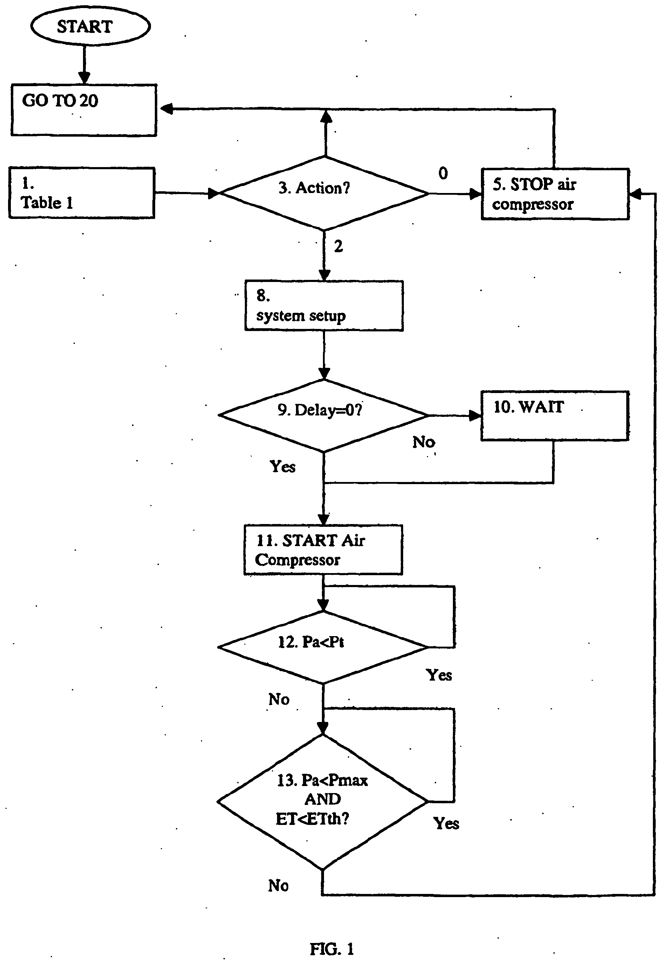

The compressor control handling process is based on respecting Pmax/Pmin and on using Tlowtorque (including braking time estimation) and Trem (remaining time before starting braking) and comprises the following steps, according to the flow chart shown in figure 1 and table 1 shown below which defines a look-up table:

Table 1

| Pa (Air pressure) | Conditions | Action | Pt(target pressure) | Delay |
|---|---|---|---|---|
| Pa>Pmax | - | 0 = (Stop-compressor) | | - |
| Ph<Pa<Pmax | - | 1 (No action) | - | - |
| P1<Pa<Ph | Trem=N.A. | 1 (No action) | - | - |
| PI<Pa<Ph | Trem≠N.A. AND/OR Tlowtorque>(q*Tr) | 2 = (Start compressor) | Pmax | Trem |
| Pmin<Pa<PI | - | 2 = (Start compressor) | Ph | Trem |
| Pa<Pmin | - | 2 = (Start compressor) | Ph | 0 (ASAP) |

Pressure values of the different variables, defined when the system is calibrated, are for example:

- Pmax: maximum pressure: 12.5 bars

- Ph: high pressure (< Pmax): 11.0 bars

- Pl: low pressure (< Ph): 10.0 bars

- Pmin: minimum pressure: 9.5 bars

- Tp: recharging preparation time of the system (e.g. 10-15 s)

- Tr = time needed for a full recharging (e.g. 30-60 s)

- q = time fraction needed for a full recharging (e.g. 0.5 s)

- ETth = Engine Torque threshold (e.g. 20%)

- ShiftTime = time needed for shifting (e.g. 4 s)

The control actions of the compressors are encoded by the variable "Action" as following:

Action = 0 means "Stop compressor",
Action = 1 means "Do not start compressor",
Action = 2 means "Start compressor",

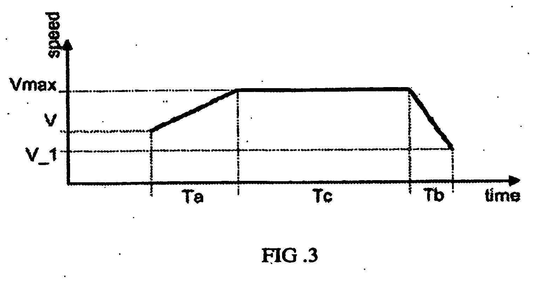

The beginning ("START") of the method includes the calculation of said Trem and of said Tlowtorque, starting from step 20, which may have real values or an indefinite value N.A., as showed in figs. 2, 3 e 4. At the end of step 60, step 1 of the handling compressor algorithm begins (go to 1), as showed in Fig. 1.

- At step 1, according to the measured value Pa and to the calculated value Trem, assigning, according to table 1, of said target pressure Pt, of said parameter defining said action to be performed (ACTION) and of the time variable Delay,
- at step 3, according to Pa value, if ACTION=0 then going to step 5, namely where the compressor is stopped and then going to step 20; if ACTION=1, going to step 20 without starting the compressor; if ACTION=2 executing step 8, namely starting the preparation of the system for recharging (system setup);
- at step 9, check Delay, in particular if Delay is zero going straight to step 11, in which starting the compressor is contemplated (START Air Compressor), otherwise going to step 10 wherein an interval of time is waited (WAIT) before executing the aforesaid step 11,
- after step 11, namely compressor starting, step 12 is executed, checking that the current pressure Pa is lower than the target pressure associated with the range in which the current pressure is located (Pa<Pt), then until said pressure is reached continuing to recharge step 12; when, instead, Pa exceeds said target pressure, going to step 13;
- at step 13, further verification that, until the current pressure does not exceed the maximum allowed pressure (while (Pa<Pmax)) and the torque delivered by the engine ET is lower than said limit threshold ETth (while(Pa<Pmax AND ET<ETth)), the compressor is kept activated before going back to step 5.

Preferably, said delay introduced at step 10 before starting the compressor may be such to delay the start-up of the compressor until the braking start instant or until the required driving torque Et is lower than said torque limit threshold ETth (Et<ETth).

Said torque condition Et<ETth is preferably considered only when a gear is engaged, so as to prevent the compressor from being caused to start during gear shifts, in which the torque required by the engine is limited but not because of braking.

Said delay due to the waiting time is not introduced when at step 9 the condition Delay = 0 occurs, namely when the air in the compressor is not sufficient (Pa<Pmin). According to said table 1, at step 1, pressure Pa is measured and when Pa<Pmin, the control action is "start compressor" and the target pressure Pt is equal to Ph and the variable Delay is forced to be equal to zero; when the current pressure Pa is between Pmin and Pl, the control action is "start compressor" and the target pressure Pt is equal to Ph, while the calculated value Trem is assigned to the variable Delay (see Fig. 4); when the current pressure Pa is between Pl and Ph, the control action is "start compressor" and the target pressure Pt is equal to Pmax, and the value Trem is assigned to the variable Delay; when the current pressure Pa is between Ph and Pmax, compressor start-up is inhibited and the variables Pt and Delay are not used; finally, when Pa>Pmax, the compressor is forced to stop.

According to table 1, the recharging of the compressed air tank is advantageously fractioned, until a target humidity Pt is reached, which depends on pressure range in which the current pressure Pa is comprised.

According to the described alternative embodiment, the compressor is stopped at step 5, after that going to step 20 in order to update the values Trem and Tlowtorque.

A requirement for the effectiveness of said algorithms is that the navigation system provides indications on the features of the road that the vehicle is about to travel. Namely, said navigation system should provide the system that is object of the present invention, by means of the communication protocol implemented on the vehicle, for example by means of the CAN line, with what can be defined as a "road horizon", namely a set of precise pieces of information about the road at a certain distance from the current position of the vehicle, provided by the digital maps available in the navigator.

More precisely, among the pieces of information contained in the road horizon, the following ones are necessary to ensure the effectiveness of the method described below:

- distance, altitude and/or slope of the road horizon
- road signage, in particular, warning signs, signs giving orders, yield signs, prohibition signs.
- presence of traffic lights, crossroads, crossings of various nature (pedestrian/rail/cycle lane crossings).

Each one of these pieces of information may determine a variation in vehicle's speed. The variations that are considered in this specific case are the ones that affect the torque request to the engine are considered.

The pieces of information forming the road horizon may also include information provided by the radio system, namely by the radio-navigator. The presence of the latter, however, do not constitute a necessary condition for the effectiveness of the method described in the following. The use of a navigation or radio-navigation system is not essential, even though the latter provides a higher amount of information about road conditions.

Among all the pieces of information included in the road horizon, the ones described in the algorithm of Fig. 2 are selected. In particular the following variables are provided as the output of the portion of the method described by means of the flow chart of Fig. 2:

Vmax = limit speed in the current position;
Amin = limit deceleration (based on the road grip coefficient, estimated on the basis of the information provided by the radio-navigator);
V_1 = maximum speed before next variation detected in a road horizon;
D_1 = distance of the road horizon, in terms of length of the road section;
L_1 = length of the route requiring speed V_1;
H_1 = altitude detected by the road horizon;
H_1 = altitude detected by the road horizon (uphill > 0, downhill < 0);

- (step 20) acquisition from the (radio-)navigator of the information on the current position of the vehicle (acquire current position data);
- (step 21) assigning a value to the variable $\mu$ representing a grip coefficient of the tyres on the road surface, as a function of the weather/road conditions detected by the radio navigator ($\mu$ adherence coefficient assignment), for example:

○ case(icy), μ = 0.1
○ case(wet), μ = 0.2
○ case(off-road), μ = 0.4
○ default, μ = 0.7

- (step 22) Vmax acquisition from the navigation system; of Amin, the latter obtained as - μ g) m/s2; of the current altitude h and slope s;
- (step 23) acquisition of data about the road horizon from (radio-)navigator (Acquire horizon data);
- (step 24) verification if, in the road horizon, at least one of the following variations causing the vehicle to stop occurs:

○ STOP/yield signs
○ change of direction,
○ compulsory turn
○ red light
○ hold-up or traffic jam

if positive step 25 is performed, otherwise step 26 is performed;

- then if next variation belongs to one of the aforementioned conditions, (step 25), assigning of the output variables, of which:

○ V_1=0
○ L_1=0

and going to step 50,

- otherwise, verification that next variation does not belong to said group of variations,
- after that (step 26) verification that next variation consists of a slope or of a negative difference of altitude (downhill) with respect to the current one, preferably lower than a predetermined selectable threshold: if positive
- (step 27), the speed limit detected in the road horizon data is assigned to V_1; if the road horizon data includes the length of the downhill slope, this value is assigned to L_1, otherwise the default or indefinite value or D_1 is assigned to L_1

and going to step 50;

- (step 28) if, on the contrary, the speed limit detected in the road horizon is lower than the current one (Speed limit < V),
- (step 29), the speed limit detected in the road horizon data is assigned to V_1 (V_1 = Speed limit); if the road horizon data includes the length of the road section with limited speed, this value is assigned to L_1, otherwise the default or indefinite value is assigned to L_1 or

going to step 50;

- otherwise, if the speed limit detected in the road horizon exceeds the current one,
- (step 30) an indefinite value is assigned to V_1 and to L_1
- going to step 50, namely calculation of Tlowtorque and Trem.

**Calculating Trem and Tlowtorque**

According to the present invention, the calculation of Tlowtorque and Trem is performed by means of a further portion of method shown in figure 4, based on the acquisition of the output of the portion of method shown in figure 2.
The output of the portion of method showed in figure 4 are Trem and Tlowtorque.
Since both parameters are predictive, their estimation may be performed according to the algorithm in Figure 4, described in the following:

• V_1 = maximum speed before next variation detected in a road horizon;
• D_1 = length of the road section;
• L_1 = length of the route requiring speed V_1 imposed by the road characteristics;

- Acquisition of:

- • H_1 = altitude detected by the road horizon;
- • S_1 = slope detected by the road horizon, being positive or negative according to the slope of a travelled road section;

- - (step 50) verification of the input V_1
- - (step 51) if V_1 is indefinite (V_1 = N.A.), Tlowtorque and Trem are indefinite (NA), going back to the beginning (step 1);
- - (step 52) otherwise, evaluation of a longitudinal acceleration a (Acceleration) of the vehicle, by means of an accelerometer, or by means of the calculation of a derivative in time of a longitudinal speed V, measured by means of phonic wheels, or obtained from the (radio-)navigation system;
- - (step 53), verification if the current acceleration is higher than zero (a>0) and if the current speed is lower than a maximum allowed speed **(V<Vmax)**,
- - If such verification is positive (step 54) then the vehicle is accelerating, therefore

  - ○ Calculation of the average time Ta that is necessary to reach the speed Vmax starting from the current speed V,
  - ○ Calculation of the distance Da that the vehicle will travel in order to reach said speed Vmax:

$$\textbf{Vref = Vmax}$$

$$\textbf{Ta = (Vref-V)/a}$$

$$\textbf{Da = 0.5*a*Ta\^2}$$

- - If, on the contrary, such verification is negative (step 56) then the vehicle has a constant speed, therefore:

$$\textbf{Vref = V}$$

$$\textbf{Ta = 0, Da = 0}$$

- - after that (step 58)

  - ○ calculation of the time that is necessary to adjust the maximum speed Vref to the speed V_1 imposed by next variation and
  - ○ calculation of the corresponding travelled distance Db;
  - ○ calculation of the travel time Tc at constant speed Vref,

$$\textbf{Tb = - (Vref - V\_1) / Amin}$$

$$\textbf{Db = - 0.5*Amin*Tb\^2}$$

$$\textbf{Tc = (D\_1-Da-Db) / Vref}$$

- - after that, (being Ta, Tb, Tc known) (step 60)

  - ○ calculation of Trem as the sum of the acceleration time Ta and the travelling time Tc with constant speed Vref and
  - ○ calculation of Tlowtorque as the sum of the braking time Tb and a time equal to the duration time (L_1/V_1) of a following event wherein the vehicle is stable at a speed requiring a driving torque lower than Etth:

$$Tlowtorque = Tb + (L\_1 / V\_1)$$

$$Trem = Ta + Tc.$$

After that going to step 1.

With further reference to Fig. 3 it is worth noting that the hypothesis that the vehicle reaches the maximum allowed speed in such road section is a precaution; since this would mean that the Tlowtorque interval is smaller.

Several braking events close in time may be considered as a single braking event thus influencing the calculation of Tlowtorque.

According to the present invention, it is estimated that, independently from the adopted pneumatic system type, by calculating Tlowtorque as the braking time Tb plus the duration time of the following event, $L\_1/V\_1$, it is possible to always ensure a good recharging level of the compressed air tank for example when travelling on hills, where the length of downhill slopes is remarkable, and may last several dozens seconds or some minutes, thus enough time to ensure a full recharging.

**Regenerating the dryer cartridge**

According to another aspect of the invention, the control unit handles the process of regenerating the cartridge for extracting condensation from the pneumatic braking system. According to the present invention, the control unit handles such regeneration in a more efficient way with respect to the prior art techniques, by calculating in a more accurate way the quantity of accumulated condensation, on the basis of the value of the air humidity, acquired by the navigation system by means of methods that can substitute each other, among which:

- an onboard humidity sensor,
- weather information.

Weather information, as said before, may be made available in various manners, i.e. via DAB (Digital Audio Broadcasting) or via a data/telephone connection such as GPRS, HSDPA, etc.

Weather information may be obtained via DAB or GPRS, or by means of onboard instruments.

As will be described in greater detail below, said control unit may be advantageously connected to the vehicle control unit(s) governing vehicle functions, such as for example the gearbox, particularly if automatic or robotized, the engine, the brakes (e.g. with ABS or EBS system), the hydraulic retarder, the stability control (ESP), the direction indicators, etc.

From the detected humidity value, it is possible to obtain the quantity of condensation accumulated in the cartridge, as explained in the following.

According to a first alternative embodiment of a method for controlling the dryer cartridge, it is based on respecting a maximum level Wmax and minimum level Wmin of condensation, but also one the current pressure level Pa, the compressor state, i.e. on or off. For this purpose, the following table 2 (shown below) defines a look-up table, similar to that shown in figure 1, which allows to assign a priority to the cartridge regeneration:

Table 2

| Wa (Water level) | Action_2 | Wt (target level) | Priority 15 |
| --- | --- | --- | --- |
| Wa>Wmax | Regeneration | Wl | 1 |
| Wh<Wa<Wmax | Regeneration | Wl | 2 |
| Wl<Wa<Wh | Regeneration | Wmin | 3 |
| Wmin<Wa<Wl | Regeneration | Wmin | 4 |
| Wa<Wmin | No regeneration | - | - 20 |

The thresholds considered in the table may be, for example:

- Wmax: maximum condensation: 150 g

- Wh: high condensation (< Wmax): 100 g

- Wl: low condensation (< Wh): 20 g

- Wmin: minimum condensation: 10 g

According to said table, with regards to the current condensation degree Wa reached by the dryer cartridge, a priority level is selected, which from maximum to minimum varies from 1 to 4, for example.

Therefore, a regeneration handling method comprises at least the following steps:

- calculation or acquisition of the air humidity value,
- Assigning, according to Table 2, of

  • an action between "Regeneration" and "No regeneration",
  • a target condensation value to be reached with the possible "Regeneration" action and
  • a further priority value;

- acquisition of the system state, comprising Pa and the value of the variable ACTION (ready for recharging/available): if available, then
- if Pa (air pressure in the tanks) exceeds one of the predetermined pressure thresholds (for example Pa>Pl) and if the assigned priority exceeds a predetermined threshold, then the operation indicated by the corresponding variable ACTION_2 is performed: Regeneration/No regeneration:
- if the current pressure Pa and the priority indicate, according to Table 2, to start the regeneration: preparation of the system for the regeneration and starting of the regeneration until the assigned target condensation (for example, Wt) is reached.

The method thus comprises the following steps:

- determination of a current humidity level (Wa) relating to the drying device,
- definition of humidity thresholds between minimum (Wmin) and maximum humidity (Wmax), preferably being equidistant between each other,
- calculation of a regeneration priority as a function proportional to the current humidity (Wa) and inversely proportional to the current pressure (Pa),
- starting of a partial regeneration if said priority exceeds a predetermined threshold.

It preferably comprises the following steps, which comprise all the steps aforesaid:

- acquisition of information relating to a route to be travelled,
- calculation of a future interval of time (Tlowtorque) wherein a driving torque lower than a predetermined threshold (ETh) is required and calculation of a remaining time (Trem) before the beginning of said interval of time,
- determination of a current humidity level (Wa) relating to the drying device,
- definition of humidity thresholds between minimum (Wmin) and maximum humidity (Wmax), preferably being equidistant between each other,
- verification that said remaining time (Trem) is higher than a time necessary to realize a regeneration fraction of the drying device,
- calculation of a regeneration priority as a function proportional to the current humidity (Wa) and inversely proportional to the current pressure (Pa),
- starting of a partial regeneration if said priority exceeds a predetermined threshold.

The operation of cartridge regeneration may be handled, similarly to a braking event, as an event wherein air is consumed, thus affecting the calculation of the aforementioned Delay.

Or, the regeneration may be controlled independently from said process of recharging the compressed air tank.

According to table 2, the regeneration may be advantageously fractioned, whereby it be partial until a target condensation level Wt is reached, depending on the range wherein the current level is comprised. Therefore, similarly to the process of recharging the compressed air tank, the process of regenerating the cartridge is appropriately fractioned to prevent penalizing braking system performance because of the drying cartridge regeneration process.

A regeneration fraction may be programmed if its duration is lower than a time equal to the Trem of a next event which requires to employ the braking system, for example. Thereby, the performance of the braking system is not effected.

Therefore, in relation to estimating the braking system use, Pa are varied and according to Pa and to the regeneration priority, the regeneration of the drying cartridge is controlled both in terms of regeneration start-up and duration.

**Determining the treated air flow rate**

The degree of humidity Wa of the dryer cartridge may be directly determined by knowing the flow rate of the air treated by the compressor, the time $t_c$ when the compressor is recharging, the temperature thereof and the atmospheric humidity $\varphi$ before intake. Atmospheric temperature and humidity may be obtained by a temperature sensor and a humidity sensor or by means of information received via GPRS or via radio (DAB). At the same time, the flow rate Q of compressed air treated by the compressor, from which said humidity is extracted, may be estimated knowing that an ideally compressed air flow rate Qid results from:

$$Q_{ID} = \frac{\rho_A}{\rho_0} \frac{\Psi n}{1.000}$$

where:

- $\rho_A$ density of the intake air [kg/m3]
- $\rho_0$ density of the air under standard conditions equal to 1.204 kg/m3
- $\psi$ displacement of the compressor [cm3]
- n speed of the compressor [rpm]

$\eta_v$ defines the compression efficiency, therefore the actually compressed air flow rate is $Q = \eta_v Q_{id}$ where $\eta_v$ may be obtained from the following expression:

$$\eta_v = 1 - v \left( \beta^{\frac{1}{k}} - 1 \right)$$

where:

- $\beta$ is a compression ratio given by the ratio of the absolute opening pressure of the delivery valve to the absolute opening pressure of the intake valve;
- $v$ is the ratio of the air volume contained in the cylinder when the piston has reached the top dead centre (TDC) to the air volume which is obtained when the cylinder reaches the bottom dead centre (BDC);
- a thermodynamic expansion coefficient k which varies from 1 and 1.4 and depends on the compressor head cooling.

Estimating the condensed humidity in the dryer cartridge on the basis of the treated flow rate

The relative air humidity $\varphi$ may be given by the ratio of the water amount per mixture volume unit $Z$ [g/m$^3$] to the maximum water amount which may be contained at a certain temperature $Z'$ [g/m$^3$] (i.e. under saturation conditions).

By good approximation, air and aqueous vapor may be seen as perfect gases, and therefore Dalton's law may be applied, which substantially asserts that in a container of a given volume, the aqueous vapor behaves as if there is no air, and the same applies to air with regards to vapor.

Therefore, indicating pressures in absolute terms (absolute bars) and using the following annotations:

$p_D$      partial pressure of aqueous vapor;
$p_D'$      partial pressure of saturated aqueous vapor;
$p_L$      partial air pressure;
$p$      total pressure in the container.

Dalton's law may thus be expressed as:

$$p = p_D + p_L \qquad (1)$$

Therefore, the air pressure $p_L$ (absolute bars) is given by:

$$p_L = p - p_D \qquad (2)$$

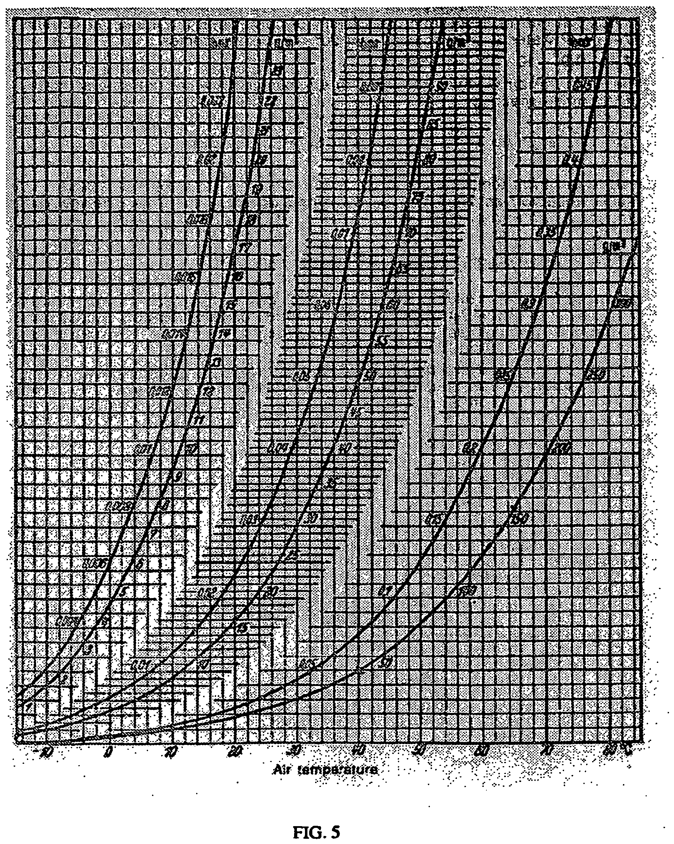

The saturation humidity $Z'$ [g/m$^3$] is according to temperature only, and such a connection may be obtained from experimental psychometric charts, such as Hinz' chart shown in figure 5, which shows the partial vapor pressure and the saturated air humidity.

We will assume that the air to be compressed has relative humidity equal to $\varphi_1$, absolute temperature equal to $T_1$ [K] and pressure $p_1$ [absolute bars].

The saturation humidity $Z_1'$ [g/m$^3$] may be obtained one the basis of the absolute temperature.

Therefore the actual humidity $Z_1$ [g/m$^3$] of the aspirated air mass is:

$$Z_1 = \varphi_1 \, Z_1' \qquad (3)$$

Given G [kg] the aspirated air mass in the intake volume: this will not vary after compression. Thus considering an aspirated air volume $V_1$ [m$^3$], for the air state equation we have:

$$p_1 \, V_1 = G \, R \, T_1 \qquad (4)$$

The air amount $Q_1$ [g] contained under intake conditions in the volume $V_1$ is thus:

$$Q_1 = Z_1 \, V_1 \qquad (5)$$

From this, it is obtained that:

$$GR = \frac{p_1 V_1}{T_1} \qquad (6)$$

After compression and expansion, the air is at pressure $p_2$ [absolute bars] and temperature $T_2$ [K], to which a saturation humidity $Z_2'$ [g/m$^3$] corresponds, which is obtained from a psychometric chart.

The air mass G is constant before and after compression and is thus:

$$p_2 \, V_2 = G \, R \, T_2 \qquad (7)$$

Therefore:

$$V_2 = GR \frac{T_2}{p_2} = \frac{T_2}{T_1} \frac{p_1}{p_2} V_1 \qquad (8)$$

thus obtaining the volume $V_2$ [m$^3$] after compression.

Then, the water amount contained after compression $Q_2$ [g] is:

$$Q_2 = Z_2' \, V_2 \qquad (9)$$

Therefore, the amount of condensed water $W$ [g] due to compression and expansion, absorbing other water in no way, according to (3), (5) and (9) is:

$$W = Q_1 - Q_2 = Z_1 \, V_1 - Z_2' \, V_2 = \varphi_1 \, Z_1' \, V_1 - Z_2' \, V_2 \qquad (10)$$

Therefore, by developing (10) with (8):

$$W = \varphi_1 Z_1' V_1 - Z_2' \frac{T_2}{T_1} \frac{p_1}{p_2} V_1 = \left( \varphi_1 Z_1' - Z_2' \frac{T_2}{T_1} \frac{p_1}{p_2} \right) V_1 \qquad (11)$$

is obtained, and the amount of condensed water per volume unit $Z_c$ [g/m$^3$] is thus:

$$Z_c = \frac{W}{V_1} = \varphi_1 Z_1' - Z_2' \frac{T_2}{T_1} \frac{p_1}{p_2} \qquad (12)$$

If air conditions after expansion are such that the temperature may be considered equal to intake temperature, then $T_1 = T_2$ and thus $Z_1' = Z_2'$. Then, in such a case, (11) is simplified as:

$$W = Z_1' \left( \varphi_1 - \frac{p_1}{p_2} \right) V_1 \qquad (13)$$

The amount of condensed water per aspirated air volume unit $Z_c$ [g/m$^3$] is thus:

$$Z_c = \frac{W}{V_1} = Z_1' \left( \varphi_1 - \frac{p_1}{p_2} \right) \qquad (14)$$

Therefore, if the average aspirated air flow rate is F [m$^3$/h], then the condensed water Y [l/h] is:

$$Y = \frac{F Z_c}{1000} \qquad (15)$$

We will assume the air at a temperature $t_1 = 20°C$ ($T_1 = 293.15$ K) and aspirated at a pressure of 1.01325 absolute bars (atmospheric pressure) under saturation conditions $\varphi_1 = 1$. The air is compressed to 11 relative bars (12.01325 absolute bars) and we will assume that, after expansion, the temperature is equal to intake temperature.

As obtained from the psychometric chart, at the temperature $t_1 = 20°C$, the saturation humidity is $Z_1' = 11.4$ g/m$^3$ and the saturated vapor pressure is 0.0235 absolute bars. Intake $p_1$ and compression $p_2$ pressures are thus equal to:

$p_1$ = 1.01325 bars - 0.0235 bars = 0.98975 bars
$p_1$ = 12.01325 bars - 0.0235 bars = 11.98975 bars

Then, the amount of condensed water per aspirated air volume unit $Z_c$ [g/m$^3$] according to (14) is thus:

$$Z_c = \frac{W}{V_1} = 17,4 \frac{g}{m^3} \left( 1 - \frac{0,98975\,bar}{11,98975\,bar} \right) = 16,0 \frac{g}{m^3} \qquad (16)$$

## EP 2 516 233 B2

The humidity contained in 1 m³ under intake conditions is $Q_1$ = 17.4 g, the air being saturated.

The volume occupied by the air mass corresponding to 1 m³ under intake conditions for (8) is:

$$V_2 = \frac{T_2}{T_1}\frac{p_1}{p_2}V_1 = \frac{293,15K}{293,15K}\frac{0,98975bar}{11,98975bar}1m^3 = 0,0825m^3 \qquad (17)$$

Therefore, the amount of water still contained in air $Q_2$ is:

$$Q_2 = 17,4\frac{g}{m^3}\times 0,0825m^3 = 1,4g \qquad (18)$$

Then, the amount of condensed water W is equal to the difference between $Q_1$ and $Q_2$:

$$W = Q_1 - Q_2 = 17,4\ g - 1,4\ g = 16,0\ g \qquad (19)$$

The value obtained with formula (16) is thus represented.

Considering then the amount $Q_2$ obtained with (18), it saturates the compressed air. If it expands at atmospheric pressure, then the air volume reoccupies the 1 m³ volume and, at a temperature of 20°C, the saturation humidity is still 17.4 g/m³.

Therefore, the new relative humidity is:

$$\varphi_2 = \frac{1,4\frac{g}{m^3}}{17,4\frac{g}{m^3}} = 8,05\% \qquad (20)$$

As can be observed in the psychometric chart in figure 5, the value of 1.4 g/m³ reaches saturation at the atmospheric pressure of -14°C, i.e. condensation only occurs for temperatures lower than -14°C.

This means that assuming an isothermal expansion of the compressed air at the exhaust, i.e. with infinite heat exchange, there is no condensation phenomena until the ambient temperature reaches the minimum value of -14°C.

On the other hand, if polytrophic expansion is considered, at the adiabatic limit, then a temperature lowering is obtained as shown in table 3, on the basis of the valid ratio for critical expansion conditions:

$$T_{exp} = T_{init}\frac{2}{m+1} \qquad (21)$$

where $T_{exp}$ [K] is the absolute temperature of end of expansion, $T_{init}$ [K] is the absolute temperature of the compressed air in the automatic circuit and m is the polytrophic coefficient of air expansion (1: isothermal; 1.4: adiabatic) which varies in the range 1-1.4, according to the entity of the thermal exchanges of the air during expansion.

***Expansion end temperatures***

Table 3

| °C | Compressed air temperature (°C) | | | | | | | | | | |
|---|---|---|---|---|---|---|---|---|---|---|---|
| M | 0 | 5 | 10 | 15 | 20 | 25 | 30 | 35 | 40 | 45 | 50 |
| 1 | 0,0 | 5,0 | 10,0 | 15,0 | 20,0 | 25,0 | 30,0 | 35,0 | 40,0 | 45,0 | 50,0 |
| 1,1 | -13,0 | -8,2 | -3,5 | 1,3 | 6,0 | 10,8 | 15,6 | 20,3 | 25,1 | 29,9 | 34,6 |
| 1,2 | -24,8 | -20,3 | -15,7 | -11,2 | -6,7 | -2,1 | 2,4 | 7,0 | 11,5 | 16,1 | 20,6 |

(continued)

| °C | Compressed air temperature (°C) | | | | | | | | | | |
|---|---|---|---|---|---|---|---|---|---|---|---|
| M | 0 | 5 | 10 | 15 | 20 | 25 | 30 | 35 | 40 | 45 | 50 |
| 1,3 | -35,6 | -31,3 | -26,9 | -22,6 | -18,2 | -13,9 | -9,5 | -5,2 | -0,8 | 3,5 | 7,9 |
| 1,4 | -45,5 | -41,4 | -37,2 | -33,0 | -28,9 | -24,7 | -20,5 | -16,4 | -12,2 | -8,0 | -3,9 |

As can be observed in the chart in figure 5, in the case of isothermal expansion, for example considering a polytrophic expansion with m= 1.3, if the compressed air is initially at the temperature of 20°C, at the end of expansion it will reach the temperature of -18.2°C. At this temperature, condensation actually occurs (which forms under -14°C).

On the other hand, if there is saturated air (100% relative humidity) under intake conditions at a temperature of 5°C and the compressed air temperature is stabilised at about 30°C in the automatic circuit, then the humidity contained in 1 $m^3$ of intake air, as obtained from the psychometric chart, is equal to 7 $g/m^3$ (at 5°C) and 30 $g/m^3$ (at 30°C) and the saturation pressure is equal to 0.009 bars (at 5°C) and 0.041 bars (at 30°C).

Intake $p_1$ and compression $p_2$ pressures are thus equal to:

$$p_1 = 1.01325 \text{ bars} - 0.009 \text{ bars} = 1.00425 \text{ bars}$$

$$p_1 = 12.01325 \text{ bars} - 0.041 \text{ bars} = 11.97225 \text{ bars}$$

The volume occupied by the air mass corresponding to 1 $m^3$ under intake conditions, on the basis of (8), is:

$$V_2 = \frac{T_2}{T_1}\frac{p_1}{p_2}V_1 = \frac{303,15K}{278,15K}\frac{1,00425bar}{11,97225bar}1m^3 = 0,0914m^3 \qquad (22)$$

Therefore, the amount of water still contained in air $Q_2$ is:

$$Q_2 = 30,0\frac{g}{m^3} \times 0,0914m^3 = 2,7g \qquad (23)$$

The amount of condensed water is thus:

$$W = Q_1 - Q_2 = 7.0 \text{ g} - 2.7 \text{ g} = 4.3 \text{ g} \qquad (24)$$

The amount $Q_2$, as obtained in (23), starts condensing when the temperature is lower than -6°C, as can be observed in the psychometric chart. According to table 3, it can be observed that in a polytrophic expansion with m=1.3, condensation may occur during the last one at final temperature (-9.5°C).

The calculation of the humidity contained in the air compressed in the compressor is functional to predicting the frequency of the regeneration of the dryer cartridge and thus to the frequency of the compressor activation, affecting the pressure Pa of the air contained in the tank. The present invention may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

**Claims**

1.  Method of handling the compressor of a pneumatic braking system, in particular for industrial vehicles, having an at least partially pneumatic braking system, the system comprising

    . a compressed air accumulation tank,
    . a corresponding compressor and a drying device,

    the method comprising the following steps:

    - acquisition of information relating to a route to be travelled,
    - calculation of a future interval of time (Tlowtorque) wherein a driving torque lower than a predetermined threshold (ETth) is required,
    - calculation of a remaining time (Trem) before the beginning of said interval of time,
    - definition of pressure thresholds between a minimum pressure (Pmin) and a maximum pressure (Pmax),
    - when a current pressure (Pa) of the compressed air contained in the accumulation tank is comprised between the thresholds, compressor preparation is started in relation to the two thresholds;
    - if the preparation to the compressor activation is started, calculation of the delay time (Delay) greater than zero before starting the compressor,
    - starting of the compressor, at the end of said delay time (Delay)

2.  Method according to claim 1, wherein said future interval of time (Tlowtorque), wherein a driving torque lower than said predetermined threshold (ETth) is required, comprises a vehicle braking time (Tb) and/or a vehicle stabilizing time at a speed lower than an initial speed (L_1/V_1).

3.  Method according to claim 1, further comprising a step for verifying that the torque (ET) required to the vehicle engine is lower than said predetermined torque (ETth) before the compressor activation when said waiting time has a value higher than zero (Delay>0).

4.  Method according to one of the previous claims, wherein said pressure thresholds are four and are equidistant between each other.

5.  Method according to the previous claims, wherein said information relating to a route to be travelled comprises:

    - variation of length, slope, inclination and bending of a road section,
    - variation of road type: urban/extra-urban/highway with particular reference to:

        ◦ changes of direction,
        ◦ signage, including warning signs, signs giving orders, yield signs, prohibition signs and horizontal signage,
        ◦ presence of traffic lights, crossroads, crossings of various nature, including pedestrian, rail, cycle lane crossings,

    - traffic information, road conditions, weather information.
    - grip coefficient ($\mu$) of the tyres on a road surface.

6.  Method according to claim 5, wherein said information is acquired and handled as events and sorted according to the time order according to which the vehicle encounters them along the travelled route, and wherein said calculation of said interval of time (Tlowtorque) is calculated for one or more consequential events.

7.  Method according to the previous claims, wherein said selection step between starting or not starting of the compressor preparation is realized by means of a following look-up table,

| Pa (Air pressure) | Conditions | Action | Pt(target pressure) | Delay |
|---|---|---|---|---|
| Pa>Pmax | - | 0 = (Stop compressor) | - | - |

(continued)

| Pa (Air pressure) | Conditions | Action | Pt(target pressure) | Delay |
|---|---|---|---|---|
| Ph<Pa<Pmax | - | 1 (No action) | - | - |
| Pl<Pa<Ph | Trem=N.A. | 1 (No action) | - | - |
| Pl<Pa<Ph | Trem≠N.A. AND/OR Tlowtorque> (q*Tr) | 2 = (Start compressor) | Pmax | Trem |
| Pmin<Pa<Pl | - | 2 = (Start compressor) | Ph | Trem |
| Pa<Pmin | - | 2 = (Start compressor) | Ph | 0 (ASAP) |

where the variables

. Pa is the current pressure measured in the compressed air tank(s),
. N.A. is an indefinite value,
. Trem is said remaining time before the beginning of said interval of time (Tlowtorque),
. Action is the selection of starting or not starting of the compressor preparation,
. Pt is a pressure to be reached once the compressor is started
. Delay is a waiting time before the actual activation of the compressor.
. Tr = time needed for a full recharging (e.g. 30-60 s)
. q = time fraction needed for a full recharging (e.g. 0.5 s)

8. Method according to claim 7, specifically comprising the following steps:

- (step 20) calculation of Trem and Tlowtorque,
- (step 1), according to the measured value Pa and to the calculated value Trem, assigning, according to table 1, of said target pressure Pt, of said parameter defining said action to be performed ACTION and of the time variable Delay,
- (step 3), dependently from the current pressure value Pa,

- (ACTION=0) the compressor stops (step 5) and going back to the beginning (step 20), or
- (ACTION=1) going back to the beginning (step 20), or
- (ACTION=2) going back to the compressor preparation (step 8);

- after that, if the compressor preparation is started, compressor activation (step 11) after a waiting time Delay (steps 9 and 10), until the current pressure Pa reaches a target pressure Pt (step 12).

9. Method according to claim 8, wherein the compressor recharging continues after said target pressure Pt is reached, if the required driving torque is lower than said threshold (ETth) and if the current pressure Pa is lower than the maximum pressure Pmax.

10. A method according to one of the previous claims, wherein calculating said interval of time Tlowtorque and said remaining time Trem before the beginning of said interval of time comprises the following preliminary steps:

- selecting an event,
- discriminating whether it is a punctual event or not,
- calculating the appropriate speed V_1 for meeting the event type and the maximum speed Vmax which may be reached before said event occurs,
- calculating the distance until the event D_1 occurs,
- calculating said distance over which the effect of said event L_1 is protracted.

11. Method according to claim 10, wherein the Trem and Tlowtorque calculation comprises the following steps:

- Calculation of the following intermediate parameters:

. V_1 is a maximum speed before next variation detected in a road horizon;
. D_1 = length of the road section;
. L_1 is a length of the route requiring speed V_1 imposed byroad characteristics;

- Acquisition of:

. H_1 is an altitude detected by the road horizon;
. S_1 is a slope detected from the road horizon, being positive or negative in relation to the slope of a travelled road section;
. information on horizontal and vertical signage and on weather conditions.

**12.** Method according to claim 11, wherein the Trem and Tlowtorque calculation comprises the following steps:

- (step 50) verification of the input V_1
- (step 51) if V_1 is indefinite, Tlowtorque and Trem are indefinite (NA), going back to the beginning (step 1);
- (step 52) otherwise, evaluation of a longitudinal acceleration of the vehicle, by means of an accelerometer, or by means of the calculation of a derivative in time of a longitudinal speed V, measured by means of phonic wheels, or obtained from the (radio-)navigation system;
- (step 53), verification if the current acceleration is higher than zero (a>0) and if the current speed is lower than a maximum allowed speed (V<Vmax),
- If such verification is positive (step 54) then the vehicle is accelerating, therefore

  ◦ Calculation of the average time Ta that is necessary to reach the speed Vmax starting from the current speed V,
  ◦ Calculation of the distance Da that the vehicle will travel in order to reach said speed Vmax:

$$\textbf{Vref = Vmax}$$

$$\textbf{Ta = (Vref-V) /a}$$

$$\textbf{Da = 0.5*a*Ta\textasciicircum 2}$$

- If, on the contrary, such verification is negative (step 56) then the vehicle has a constant speed;

$$\textbf{Vref = V}$$

$$\textbf{Ta = 0, Da = 0}$$

- after that (step 58)

  ◦ calculation of the time that is necessary to adjust the maximum speed Vref to the speed V_1 imposed by next variation and
  ◦ calculation of the corresponding travelled distance Db;
  ◦ calculation of the travel time Tc at constant speed Vref;

$$\textbf{Tb = - (Vref - V\_1) / Amin}$$

$$\textbf{Db = - 0.5*Amin*Tb\textasciicircum 2}$$

$$Tc = (D\_1-Da-Db) / Vref$$

- after that, (being Ta, Tb, Tc known) (step 60)

  ◦ calculation of Trem as the sum of the acceleration time Ta and the travelling time Tc with constant speed Vref and
  ◦ calculation of Tlowtorque as the sum of the braking time Tb and a time equal to the duration time (L_1/V_1) of a following event wherein the vehicle is stable at a speed requiring a driving torque lower than ETth :

$$Tlowtorque = Tb + (L\_1 / V\_1)$$

$$Trem = Ta + Tc.$$

13. Method according to claims 11 or 12 for the preliminary calculation of said intermediate parameters: V_1, Vmax, D_1, L_1 comprising the following steps:

  - (step 20) acquisition from the (radio-)navigator of the information on the current position of the vehicle;
  - (step 21) assigning of a value to the variable $\mu$ representing a grip coefficient of the tyres on the road surface, as a function of the weather/road conditions detected by the radio navigator, for example:

    ◦ case(icy), $\mu = 0.1$
    ◦ case(wet), $\mu = 0.2$
    ◦ case(off-road), $\mu = 0.4$
    ◦ default, $\mu = 0.7$

  - (step 22) acquisition of:

    ◦ Vmax from the navigation system;
    ◦ Amin = $-\mu$g m/s2;
    ◦ altitude h and
    ◦ current slope s.

  - (step 23) acquisition of data about road horizon from (radio-)navigator.
  - (step 24) verification if in the road horizon at least one of the following variation causing the vehicle to stop occurs:

    ◦ STOP/yield signs
    ◦ change of direction,
    ◦ compulsory turn
    ◦ red light
    ◦ hold-up or traffic jam
    if positive, step 25 is performed, otherwise step 26 is performed;

  - then if next variation belongs to one of the aforementioned conditions, (step 25), assigning of the output variables, of which:

    ◦ V_1=0
    ◦ L_1=0

and going to Tlowtorque and Trem calculation,

  - otherwise, verification that next variation does not belong to said group of variations,
  - after that (step 26) verification that the following variation consists of a slope or of a negative difference of altitude with respect to the current one, preferably lower than a predetermined selectable threshold: if positive
  - (step 27), the speed limit detected in the road horizon data is assigned to V_1; if among the road horizon data the length of the downhill slope is known, this value is assigned to L_1, otherwise the default or indefinite value or D_1 is assigned to L_1.

and going to Tlowtorque and Trem calculation;

- (step 28) if, on the contrary, the detected speed limit from the road horizon is lower than the current one,
- (step 29), the speed limit detected in the road horizon data is assigned to V_1; if the road horizon data includes the length of the road section with limited speed, this value is assigned to L_1, otherwise the default or indefinite value is assigned to L_1 or going to Tlowtorque and Trem calculation;
- otherwise, if the detected speed limit from the road horizon exceeds the current one,
- (step 30) an indefinite value is assigned to V_1 and to L_1

and going to Tlowtorque and Trem calculation.

14. A device for handling a pneumatic braking system compressor, in particular for industrial vehicles, the braking system being at least partially pneumatic and comprising a compressed air accumulation tank, a corresponding compressor and a regeneration device, the handling device comprising interface means adapted to interface with a vehicle navigation system **characterised by** means adapted to carry out the steps according to claims from 1 to 13.

15. A device according to claim 14, further comprising second interface means adapted to interface with a DAB device and/or with a data connection and/or onboard sensors and/or a vehicle control unit for governing at least once vehicle function.

16. Computer program comprising program code means suitable for performing the steps of any claim from 1 to 13, when such program is run on a computer.

17. Computer-readable means comprising a recorded program, said computer-readable means comprising program code means suitable for performing the steps according to claims from 1 to 13, when said program is run on a computer.

**Patentansprüche**

1. Verfahren zum Handhaben des Kompressors eines pneumatischen Bremssystems, insbesondere für Nutzfahrzeuge, mit einem mindestens teilweise pneumatischen Bremssystem, wobei das System aufweist

   • einen Druckluftansammlungstank,
   • einen entsprechenden Kompressor und eine Trocknungsvorrichtung, wobei das Verfahren die folgenden Schritte aufweist:

      - Aufnehmen von Informationen bezogen auf eine Route, die gefahren werden soll:
      - Berechnen eines zukünftigen Zeitintervalls (Tlowtorque), wobei ein Antriebsdrehmoment erforderlich ist, das niedriger als ein vorbestimmter Schwellenwert (ETth) ist,
      - Berechnen einer verbleibenden Zeit (Trem) vor dem Beginn des Zeitintervalls,
      - Definieren von Druckschwellenwerten zwischen einem minimalen Druck (Pmin) und einem maximalen Druck (Pmax),
      - falls ein derzeitiger Druck (Pa) der Druckluft in dem Druckluftansammlungstank zwischen den Schwellwerten liegt, Starten der Kompressorvorbereitung in Abhängigkeit von den zwei Schwellwerten;
      - falls die Vorbereitung zur Kompressoraktivierung gestartet wird, Berechnen der Verzögerungszeit (Delay) größer als Null vor dem Starten des Kompressors,
      - Starten des Kompressors am Ende der Verzögerungszeit (Delay).

2. Verfahren nach Anspruch 1, wobei das zukünftige Zeitintervall (Tlowtorque), wobei ein Antriebsdrehmoment erforderlich ist, das niedriger als der vorbestimmte Schwellenwert (ETth) ist, eine Fahrzeugbremszeit (Tb) und/oder eine Fahrzeugstabilisierungszeit aufweist, bei einer Geschwindigkeit, die niedriger als eine Anfangsgeschwindigkeit (L_1/V_1) ist.

3. Verfahren nach Anspruch 1, weiter aufweisend einen Schritt zum Verifizieren, dass das Drehmoment (Et), dass an dem Fahrzeugmotor benötigt wird, niedriger ist, als das vorbestimmte Drehmoment (ETth) vor der Aktivierung des Kompressors, wenn die Wartezeit einen Wert größer als Null (Delay>0) hat.

4. Verfahren nach einem der vorhergehenden Ansprüche, wobei die Druckschwellenwerte vier sind und zwischen einander äquidistant sind.

5. Verfahren nach den vorhergehenden Ansprüchen, wobei die Informationen bezogen auf eine Route, die gefahren werden soll, aufweisen:

- Änderung der Länge, Steigung, Neigung und Krümmung eines Straßenabschnitts,
- Änderung des Straßentyps: innerorts / außerorts / Autobahn mit besonderem Bezug zu:

  ∘ Änderungen der Richtung,
  ∘ Beschilderung, einschließlich Warnschilder, Schilder die Anweisungen geben, Vorfahrtsschilder, Verbotsschilder und horizontale Beschilderung,
  ∘ Vorhandensein von Ampeln, Kreuzungen, Kreuzungen verschiedener Art, einschließlich Fußgänger-, Schienen-, Radwegkreuzungen,

- Verkehrsinformationen, Straßenzustände, Wetterinformationen,
- Haftkoeffizient ($\mu$) der Reifen auf einer Fahrbahnoberfläche.

6. Verfahren nach Anspruch 5, wobei die Informationen aufgenommen werden und als Ereignisse behandelt werden und nach der zeitlichen Reihenfolge sortiert werden, nach der das Fahrzeug sie entlang der zurückgelegten Route antrifft, und wobei die Berechnung des Zeitintervalls (Tlowtorque) für ein oder mehrere daraus folgende Ereignisse berechnet wird.

7. Verfahren nach den vorhergehenden Ansprüchen, wobei der Auswahlschritt zwischen dem Starten oder dem nicht Starten der Kompressorvorbereitung durch eine folgende Nachschlagetabelle realisiert wird,

| Pa (Luftdruck) | Bedingungen | Aktion | Pt (Zieldruck) | Verzögerung |
|---|---|---|---|---|
| Pa>Pmax | - | 0= (Kompressor stoppen) | - | - |
| Ph<Pa<Pmax | | 1 (keine Aktion) | - | - |
| P1<Pa<Ph | Trem=N.A. | 1 (keine Aktion) | - | - |
| P1<Pa<Ph | Trem≠N.A. und/oder Tlowtorque >(q*Tr) | 2= (Kompressor starten) | Pmax | Trem |
| Pmin<Pa<P1 | - | 2= (Kompressor starten) | Ph | Trem |
| Pa<Pmin | - | 2= (Kompressor starten) | Ph | 0 (ASAP) |

wo die Variablen

• Pa der derzeitige Druck ist, der in dem Luftdrucktank / den Luftdrucktanks gemessen wird,
• N.A. ein unbestimmter Wert ist,
• Trem die verbleibende Zeit vor dem Beginn des Zeitintervalls (Tlowtorque) ist,
• Aktion die Auswahl von Starten oder nicht Starten der Kompressorvorbereitung ist,
• Pt ein Druck ist, der erreicht werden soll, sobald der Kompressor gestartet wird,
• Verzögerung eine Wartezeit vor der tatsächlichen Aktivierung des Kompressors ist,
• Tr = Zeit benötigt für eine vollständige Wiederaufladung (z. B. 30-60 s),
• q = Zeitanteil benötigt für eine vollständige Wiederaufladung (z. B. 0.5 s).

8. Verfahren nach Anspruch 7, speziell aufweisend die folgenden Schritte:

- (Schritt 20) Berechnen von Trem und Tlowtorque,
- (Schritt 1), entsprechend dem gemessenen Wert Pa und dem berechneten Wert Trem, Zuordnen, entsprechend Tabelle 1, des Zieldrucks Pt, des Parameters, der die Aktion definiert, um AKTION auszuführen, und der zeitlich variablen Verzögerung,

- (Schritt 3), abhängig von dem derzeitigen Druckwert Pa,

  - (AKTION=0) der Kompressor stoppt (Schritt 5) und Zurückgehen zum Anfang (Schritt 20), oder
  - (AKTION=1) Zurückgehen zum Anfang (Schritt 20), oder
  - (AKTION=2) Zurückgehen zu der Kompressorvorbereitung (Schritt 8);

- danach, falls die Kompressorvorbereitung gestartet ist, Aktivierung des Kompressors (Schritt 11) nach einer Wartezeitverzögerung (Schritte 9 und 10), bis der derzeitige Druck Pa einen Zieldruck Pt erreicht (Schritt 12).

9. Verfahren nach Anspruch 8, wobei die Wiederaufladung des Kompressors weitergeht nachdem der Zieldruck Pt erreicht wird, falls das erforderliche Antriebsdrehmoment niedriger als der Schwellenwert (ETth) ist, und falls der derzeitige Druck Pa niedriger als der maximale Druck Pmax ist.

10. Verfahren nach einem der vorhergehenden Ansprüche, wobei das Berechnen des Zeitintervalls Tlowtorque und der verbleibenden Zeit Trem vor dem Beginn des Zeitintervalls die folgenden vorausgehenden Schritte aufweist:

    - Auswählen eines Ereignisses,
    - Unterscheiden, ob es ein punktuelles Ereignis ist oder nicht,
    - Berechnen der angemessenen Geschwindigkeit V_1 zum Zusammentreffen des Ereignistyps und der maximalen Geschwindigkeit Vmax, die erreicht werden kann bevor das Ereignis eintritt,
    - Berechnen der Entfernung bis das Ereignis D_1 eintritt,
    - Berechnen der Entfernung über welche der Effekt des Ereignisses L_1 sich hinzieht.

11. Verfahren nach Anspruch 10, wobei die Trem- und Tlowtorque-Berechnung die folgenden Schritte aufweist:

    - Berechnen der folgenden Zwischenparameter:

      • V_1 ist eine maximale Geschwindigkeit bevor die nächste Änderung in einem Straßenhorizont detektiert wird;
      • D_1 = Länge des Straßenabschnitts;
      • L_1 ist eine Länge der Route, welche die Geschwindigkeit V_1 erfordert, die durch Straßeneigenschaften auferlegt wird;

    - Aufnehmen von:

      • H_1 ist eine Höhe, die über den Straßenhorizont erfasst wird;
      • S_1 ist eine Steigung, die von dem Straßenhorizont erfasst wird, die positiv oder negativ in Bezug zu der Steigung von einem gefahrenen Straßenabschnitt ist;
      • Informationen von horizontaler und vertikaler Beschilderung und von Wetterbedingungen.

12. Verfahren nach Anspruch 11, wobei die Trem- und Tlowtorque-Berechnung die folgenden Schritte aufweist:

    - (Schritt 50) Verifizieren der Eingabe V_1;
    - (Schritt 51) falls V_1 unbestimmt ist, sind Tlowtorque und Trem unbestimmt (NA), Zurückgehen zum Anfang (Schritt 1);
    - (Schritt 52) andernfalls, Auswerten einer Längsbeschleunigung des Fahrzeugs durch einen Beschleunigungsmesser oder durch die Berechnung einer zeitlichen Ableitung einer Längsgeschwindigkeit V, gemessen durch phonische Räder oder erhalten von dem (Funk-) Navigationssystem;
    - (Schritt 53) Verifizieren ob die derzeitige Beschleunigung größer als Null ist (a>0) und ob die derzeitige Geschwindigkeit kleiner als eine maximal erlaubte Geschwindigkeit ist (V<Vmax),
    - Falls eine solche Verifikation positiv ist (Schritt 54), dann beschleunigt das Fahrzeug, deswegen

      ◦ Berechnen der durchschnittlichen Zeit Ta, die notwendig ist, um die Geschwindigkeit Vmax zu erreichen, startend von der derzeitigen Geschwindigkeit V,
      ◦ Berechnen der Distanz Da, die das Fahrzeug fahren wird, um die Geschwindigkeit Vmax zu erreichen:

$$Vref = Vmax$$

$$Ta = (Vref-V)/a$$

$$Da = 0.5*a*Ta^2$$

- Falls, im Gegensatz, eine solche Verifikation negativ ist (Schritt 56), dann hat das Fahrzeug eine konstante Geschwindigkeit;

$$Vref = V$$

$$Ta = 0, Da = 0$$

- danach (Schritt 58)

  ◦ Berechnen der Zeit, die notwendig ist, um die maximale Geschwindigkeit Vref auf die Geschwindigkeit V_1 einzustellen, die durch die nächste Änderung auferlegt wurde, und
  ◦ Berechnen der entsprechenden gefahrenen Distanz Db;
  ◦ Berechnen der Fahrzeit Tc bei konstanter Geschwindigkeit Vref;

$$Tb = - (Vref – V\_1) / Amin$$

$$Db = - 0.5*Amin*Tb^2$$

$$Tc = (D\_1-Da-Db) / Vref$$

- danach, (Ta, Tb, Tc sind bekannt) (Schritt 60)

  ◦ Berechnen von Trem als die Summe der Beschleunigungszeit Ta und der Fahrzeit Tc mit konstanter Geschwindigkeit Vref und
  ◦ Berechnen von Tlowtorque als die Summe der Bremszeit Tb und einer Zeit die gleich zu der Zeitdauer (L_1/V_1) von einem folgenden Ereignis ist, wobei das Fahrzeug stabil bei einer Geschwindigkeit ist, die ein Antriebsdrehmoment niedriger als ETth erfordert:

$$Tlowtorque = Tb + (L\_1 / V\_1)$$

$$Trem = Ta + Tc.$$

**13.** Verfahren nach Anspruch 11 oder 12 zur vorausgehenden Berechnung der Zwischenparameter: V_1, Vmax, D_1, L_1 aufweisend die folgenden Schritte:

- (Schritt 20) Aufnehmen der Informationen über die derzeitige Position des Fahrzeugs von dem (Funk-) Navigator;
- (Schritt 21) Zuordnen von einem Wert an die Variable μ, die einen Haftungskoeffizienten der Räder auf der Straßenoberfläche repräsentiert, als eine Funktion der Wetter-/Straßenbedingungen, die durch den Funknavigator erfasst werden, zum Beispiel:

◦ Fall (vereist), $\mu$ = 0.1
◦ Fall (nass), $\mu$ = 0.2
◦ Fall (Gelände), $\mu$ = 0.4
◦ Standard, $\mu$ = 0.7

- (Schritt 22) Aufnehmen von:

◦ Vmax von dem Navigationssystem;
◦ Amin = -$\mu$g m/s2;
◦ Höhe h und
◦ derzeitige Steigung s

- (Schritt 23) Aufnehmen von Daten über den Straßenhorizont von dem (Funk-) Navigator
- (Schritt 24) Verifizieren ob in dem Straßenhorizont mindestens eine der folgenden Änderungen, die das Fahrzeug veranlassen zu stoppen, erfolgt:

◦ STOPP-/Vorfahrtsschilder
◦ Änderung der Richtung
◦ vorgeschriebene Wendung
◦ Rotl icht
◦ Störung oder Stau
falls positiv, Schritt 25 wird ausgeführt, andernfalls Schritt 26 wird ausgeführt;

- dann, falls die nächste Änderung zu einer der oben genannten Bedingungen gehört, (Schritt 25), Zuordnen der Ausgangsvariablen, von welchen:

◦ V_1=0
◦ L_1=0

und Fortfahren mit der Tlowtorque- und der Trem-Berechnung,
- andernfalls, Verifizieren, dass die nächste Änderung nicht zu der Gruppe von Änderungen gehört,
- danach (Schritt 26) Verifizieren, dass die folgende Änderung aus einer Steigung oder aus einer negativen Differenz einer Höhe, in Bezug zu der Derzeitigen, besteht, vorzugsweise niedriger als ein vorbestimmter auswählbarer Schwellenwert: falls positiv
- (Schritt 27), die Geschwindigkeitsbegrenzung, die in den Straßenhorizontdaten erfasst wird, wird V_1 zugeordnet; falls unter den Straßenhorizontdaten die Länge der bergabwärts Steigung bekannt ist, wird dieser Wert L_1 zugeordnet, andernfalls werden der Standardwert oder unbestimmte Wert oder D_1 L_1 zugeordnet, und Fortfahren mit der Tlowtorque- und der Trem-Berechnung;
- (Schritt 28) falls, im Gegensatz, die von dem Straßenhorizont erfasste Geschwindigkeitsbegrenzung niedriger als die Derzeitige ist,
- (Schritt 29), die Geschwindigkeitsbegrenzung, die in den Straßenhorizontdaten erfasst wird, wird V_1 zugeordnet; falls die Straßenhorizontdaten die Länge des Straßenabschnitts mit begrenzter Geschwindigkeit enthalten, wird dieser Wert L_1 zugeordnet, andernfalls werden der Standardwert oder unbestimmte Wert L_1 zugeordnet oder
Fortfahren mit der Tlowtorque- und der Trem-Berechnung;
- andernfalls, falls die von dem Straßenhorizont erfasste Geschwindigkeitsbegrenzung die Derzeitige überschreitet,
- (Schritt 30) ein unbestimmter Wert wird V_1 und L_1 zugeordnet und Fortfahren mit der Tlowtorque- und der Trem-Berechnung.

14. Vorrichtung zum Handhaben eines Kompressors eines pneumatischen Bremssystems, insbesondere für Nutzfahrzeuge, wobei das Bremssystem mindestens teilweise pneumatisch ist und einen Druckluftansammlungstank, einen entsprechenden Kompressor und eine Regenerationsvorrichtung aufweist, wobei die Handhabungsvorrichtung Schnittstellenmittel aufweist, die geeignet sind, um sich mit einem Fahrzeugnavigationssystem zu verbinden, **gekennzeichnet durch** Mittel, die geeignet sind, um die Schritte nach den Ansprüchen 1 bis 13 auszuführen.

15. Vorrichtung nach Anspruch 14, weiter aufweisend zweite Schnittstellenmittel, die geeignet sind, um sich mit einer DAB-Vorrichtung und/oder mit einer Datenverbindung und/oder Onboard-Sensoren und/oder einer Fahrzeugsteuereinheit zum Steuern mindestens einer Fahrzeugfunktion zu verbinden.

16. Computerprogramm aufweisend Programmcodemittel, die geeignet sind, um die Schritte nach einem der Ansprüche 1 bis 13 auszuführen, wenn ein solches Programm auf einem Computer ausgeführt wird.

17. Computerlesbare Mittel aufweisend ein gespeichertes Programm, wobei die computerlesbaren Mittel Programmcodemittel aufweisen, die geeignet sind, um die Schritte nach den Ansprüchen 1 bis 13 auszuführen, wenn das Programm auf einem Computer ausgeführt wird.

**Revendications**

1. Procédé de gestion du compresseur d'un système de freinage pneumatique, en particulier pour des véhicules industriels, comportant un système de freinage au moins partiellement pneumatique, le système comprenant :

    . un réservoir d'accumulation d'air comprimé,
    . un compresseur correspondant et un dispositif de séchage,

    le procédé comprenant les étapes suivantes :

    - d'acquisition d'informations concernant un trajet à parcourir,
    - de calcul d'un intervalle de temps futur (Tlowtorque) dans lequel un couple moteur inférieur à un seuil prédéterminé (ETth) est nécessaire,
    - de calcul d'un temps restant (Trem) avant le commencement dudit intervalle de temps,
    - de définition de seuils de pression entre une pression minimum (Pmin) et une pression maximum (Pmax),
    - lorsqu'une pression actuelle (Pa) de l'air comprimé contenu dans le réservoir d'accumulation est comprise entre les seuils, la préparation du compresseur est débutée en relation avec les deux seuils ;
    - si la préparation pour l'activation du compresseur est débutée, de calcul du temps de retard (Delay) supérieur à zéro avant le démarrage du compresseur,
    - de démarrage du compresseur, à la fin dudit temps de retard (Delay).

2. Procédé selon la revendication 1, dans lequel ledit intervalle de temps futur (Tlowtorque), dans lequel un couple moteur inférieur au dit seuil prédéterminé (ETth) est nécessaire, comprend un temps de freinage de véhicule (Tb) et/ou un temps de stabilisation de véhicule à une vitesse inférieure à une vitesse initiale (L_1/V_1).

3. Procédé selon la revendication 1, comprenant en outre une étape pour vérifier que le couple (ET) nécessaire pour le moteur d'automobile est inférieur au dit couple prédéterminé (ETth) avant l'activation du compresseur lorsque ledit temps d'attente a une valeur supérieure à zéro (Delay > 0).

4. Procédé selon l'une des revendications précédentes, dans lequel lesdits seuils de pression sont au nombre de quatre et sont équidistants les uns des autres.

5. Procédé selon les revendications précédentes, dans lequel lesdites informations concernant un trajet à parcourir comprennent :

    - une variation d'une longueur, d'une pente, d'une inclinaison et d'une courbure d'une section de route,
    - une variation de type de route : urbaine/extra-urbaine/route principale avec une référence particulière à :

        ° des changements de direction,
        ° une signalisation, comprenant des panneaux d'avertissement, des panneaux donnant des ordres, des panneaux de cession de passage, des panneaux d'interdiction et une signalisation horizontale,
        ◦ une présence de feux de signalisation, de carrefours, de croisements de diverses natures, comprenant des croisements de voies piétonnes, voies de chemin de fer, de voies cyclables,

    - des informations de trafic, des conditions de route, des informations météorologiques,
    - un coefficient d'adhérence ($\mu$) des pneus sur un revêtement routier.

6. Procédé selon la revendication 5, dans lequel lesdites informations sont acquises et gérées en tant qu'événements et triées en fonction de l'ordre temporel selon lequel le véhicule les rencontre le long du trajet parcouru, et dans lequel ledit calcul dudit intervalle de temps (Tlowtorque) est effectué pour un ou plusieurs événements consécutifs.

**7.** Procédé selon les revendications précédentes, dans lequel ladite étape de sélection entre le démarrage ou le non démarrage de la préparation du compresseur est réalisée au moyen d'une table de correspondance suivante,

| Pa (pression d'air) | Conditions | Action | Pt (pression cible) | Delay (retard) |
|---|---|---|---|---|
| Pa > Pmax | - | 0 = (arrêter le compresseur) | - | - |
| Ph < Pa < Pmax | - | 1 (pas d'action) | - | - |
| Pl < Pa < Ph | Trem = N.A. | 1 (pas d'action) | - | - |
| Pl < Pa < Ph | Trem # N.A. ET/OU Tlowtorque > (q*Tr) | 2 = (démarrer le compresseur) | Pmax | Trem |
| Pmin < Pa < Pl | - | 2 = (démarrer le compresseur) | Ph | Trem |
| Pa < Pmin | - | 2 = (démarrer le compresseur) | Ph | 0 (ASAP) |

où les variables

. Pa est la pression actuelle mesurée dans le ou les réservoirs d'air comprimé,
. N.A. est une valeur indéfinie,
. Trem est ledit temps restant avant le commencement dudit intervalle de temps (Tlowtorque),
. Action est la sélection du démarrage ou du non démarrage de la préparation du compresseur,
. Pt est une pression à atteindre une fois que le compresseur est démarré,
. Delay est un temps d'attente avant l'activation réelle du compresseur,
. Tr = temps nécessaire pour une recharge totale (par exemple, 30 à 60 s),
. q = fraction de temps nécessaire pour une recharge totale (par exemple, 0,5 s).

**8.** Procédé selon la revendication 7, comprenant spécifiquement les étapes suivantes :

- (étape 20) calcul de Trem et de Tlowtorque,
- (étape 1), en fonction de la valeur Pa mesurée et de la valeur Trem calculée, attribution, conformément à la table 1, de ladite pression cible Pt, dudit paramètre définissant ladite action à effectuer ACTION et de la variable de temps Delay,
- (étape 3), en fonction de la valeur de pression actuelle Pa,
- (ACTION = 0) le compresseur s'arrête (étape 5) et retour au début (étape 20), ou
- (ACTION = 1) retour au début (étape 20), ou
- (ACTION = 2) retour à la préparation du compresseur (étape 8) ;
- après cela, si la préparation du compresseur est débutée, activation du compresseur (étape 11) après un temps d'attente Delay (étapes 9 et 10), jusqu'à ce que la pression actuelle Pa atteigne une pression cible Pt (étape 12).

**9.** Procédé selon la revendication 8, dans lequel la recharge du compresseur se poursuit après que ladite pression cible Pt a été atteinte, si le couple moteur nécessaire est inférieur au dit seuil (ETth) et si la pression actuelle Pa est inférieure à la pression maximum Pmax.

**10.** Procédé selon l'une des revendications précédentes, dans lequel le calcul dudit intervalle de temps Tlowtorque et dudit temps restant Trem avant le commencement dudit intervalle de temps comprend les étapes préliminaires suivantes :

- de sélection d'un événement,
- de détermination qu'il s'agit d'un événement ponctuel ou non,

- de calcul de la vitesse appropriée V_1 pour satisfaire au type d'événement et à la vitesse maximum Vmax qui peut être atteinte avant que ledit événement se produise,
- de calcul de la distance jusqu'à ce que l'événement D_1 se produise,
- de calcul de ladite distance sur laquelle l'effet dudit événement L_1 est prolongé.

**11.** Procédé selon la revendication 10, dans lequel le calcul de Trem et de Tlowtorque comprend les étapes suivantes :

- de calcul des paramètres intermédiaires suivants :

. V_1 est une vitesse maximum avant une variation suivante détectée dans un horizon de route ;
. D_1 = longueur de la section de route ;
. L_1 est une longueur du trajet nécessitant la vitesse V_1 imposée par les caractéristiques de la route ;

- d'acquisition de :

. H_1 est une altitude détectée par l'horizon de route ;
. S_1 est une pente détectée par rapport à l'horizon de route, qui est positive ou négative en relation avec la pente d'une section de route parcourue ;
. des informations concernant des signalisations horizontales et verticales ou des conditions météorologiques.

**12.** Procédé selon la revendication 11, dans lequel le calcul de Trem et de Tlowtorque comprend les étapes suivantes :

- (étape 50) vérification de l'entrée V_1 ;
- (étape 51) si V_1 est indéfini, Tlowtorque et Trem sont indéfinis (NA), retour au début (étape 1) ;
- (étape 52) autrement, évaluation d'une accélération longitudinale a du véhicule, au moyen d'un accéléromètre, ou au moyen du calcul d'une dérivée par rapport au temps d'une vitesse longitudinale V, mesurée au moyen de roues phoniques ou obtenue à partir du système de (radio)navigation ;
- (étape 53), vérification si l'accélération actuelle est supérieure à zéro (a > 0) et si la vitesse actuelle est inférieure à une vitesse maximum autorisée (V < Vmax),
- si cette vérification est positive (étape 54), alors le véhicule accélère, par conséquent

◦ calcul du temps moyen Ta qui est nécessaire pour atteindre la vitesse Vmax en débutant à la vitesse actuelle V,
◦ calcul de la distance Da que le véhicule parcourra afin d'atteindre ladite vitesse Vmax :

$$Vref = Vmax$$

$$Ta = (Vref-V)/a$$

$$Da = 0,5*a*Ta^2$$

- si, au contraire, cette vérification est négative (étape 56), alors le véhicule a une vitesse constante ;

$$Vref = V$$

$$Ta = 0, Da = 0$$

- après cela (étape 58)

◦ calcul du temps qui est nécessaire pour ajuster la vitesse maximum Vref à la vitesse V_1 imposée par une variation suivante et

◦ calcul de la distance parcourue Db correspondante ;
◦ calcul du temps de déplacement Tc à une vitesse constante Vref ;

$$Tb = - (Vref - V\_1)/Amin$$

$$Db = - 0,5*Amin*Tb^2$$

$$Tc = (D\_1-Da-Db)/Vref$$

- après cela, (Ta, Tb, Tc étant connus) (étape 60)

◦ calcul de Trem en tant que somme du temps d'accélération Ta et du temps de déplacement Tc avec une vitesse constante Vref et
◦ calcul de Tlowtorque en tant que somme du temps de freinage Tb et d'un temps égal à la durée (L_1/V_1) d'un événement suivant dans lequel le véhicule est stable à une vitesse nécessitant un couple moteur inférieur à ETth :

$$Tlowtorque = Tb + (L\_1/V\_1)$$

$$Trem = Ta + Tc.$$

13. Procédé selon la revendication 11 ou 12 pour le calcul préliminaire desdits paramètres intermédiaires V_1, Vmax, D_1, L_1 comprenant les étapes suivantes :

- (étape 20) acquisition à partir du (radio)navigateur des informations concernant la position actuelle du véhicule ;
- (étape 21) attribution d'une valeur à la variable $\mu$ représentant un coefficient d'adhérence des pneus sur le revêtement routier, en fonction des conditions météorologiques/de route détectées par le radionavigateur, par exemple :

◦ Case(icy), $\mu$ = 0,1
◦ Case(wet), $\mu$ = 0,2
◦ Case(off-road), $\mu$ = 0,4
◦ Default, $\mu$ = 0,7

- (étape 22) d'acquisition de :

◦ Vmax à partir du système de navigation ;
◦ Amin = -$\mu$g m/s2 ;
◦ altitude h ; et
◦ pente actuelle s.

- (étape 23) acquisition de données concernant un horizon de route à partir du (radio)navigateur.
- (étape 24) vérification si, dans l'horizon de route, au moins l'une des variations suivantes amenant le véhicule à s'arrêter se produit :

◦ des panneaux de stop/de cession de passage
◦ un changement de direction
◦ un virage obligatoire
◦ un feu rouge
◦ un ralentissement ou un bouchon

si elle est positive, l'étape 25 est exécutée, autrement l'étape 26 est exécutée ;

- ensuite, si une variation suivante appartient à l'une des conditions susmentionnées, (étape 25), attribution des variables de sortie, dont :

    ° V_1 = 0
    ° L_1 = 0

et passage au calcul de Tlowtorque et de Trem,
- autrement, vérification que la variation suivante n'appartient pas au dit groupe de variations,
- après cela (étape 26), vérification que la variation suivante consiste en une pente ou en une différence négative d'altitude par rapport à celle actuelle, de préférence inférieure à un seuil sélectionnable prédéterminé : si elle est positive
- (étape 27), la limite de vitesse détectée dans les données d'horizon de route est attribuée à V_1 ; si, parmi les données d'horizon de route, la longueur de la pente descendante est connue, cette valeur est attribuée à L_1, autrement la valeur par défaut ou une valeur indéfinie ou D_1 est attribué à L_1, et passage au calcul de Tlowtorque et de Trem ;
- (étape 28) si, au contraire, la limite de vitesse détectée à partir de l'horizon de route est inférieure à celle actuelle,
- (étape 29), la limite de vitesse détectée dans les données d'horizon de route est attribuée à V_1 ; si les données d'horizon de route comprennent la longueur de la section de route avec une vitesse limitée, cette valeur est attribuée à L_1, autrement la valeur par défaut ou une valeur indéfinie est attribuée L_1 ou
passage au calcul de Tlowtorque et de Trem ;
- autrement, si la limite de vitesse détectée à partir de l'horizon de route dépasse celle actuelle,
- (étape 30) une valeur indéfinie est attribuée à V_1 et à L_1
et passage au calcul de Tlowtorque et de Trem.

14. Dispositif de gestion d'un compresseur de système de freinage pneumatique, en particulier pour des véhicules industriels, le système de freinage étant au moins partiellement pneumatique et comprenant un réservoir d'accumulation d'air comprimé, un compresseur correspondant et un dispositif de régénération, le dispositif de gestion comprenant des moyens d'interface conçus pour s'interfacer avec un système de navigation de véhicule, **caractérisé par** des moyens conçus pour exécuter les étapes selon les revendications 1 à 13.

15. Dispositif selon la revendication 14, comprenant en outre des deuxièmes moyens d'interface conçus pour s'interfacer avec un dispositif DAB et/ou avec une connexion de données et/ou des capteurs embarqués et/ou une unité de commande de véhicule pour commander a u moins une fonction de véhicule.

16. Programme d'ordinateur comprenant des moyens formant code de programme appropriés pour exécuter les étapes selon l'une quelconque des revendications 1 à 13, lorsque ce programme est exécuté sur un ordinateur.

17. Moyens pouvant être lus par un ordinateur comprenant un programme enregistré, lesdits moyens pouvant être lus par un ordinateur comprenant des moyens formant code de programme appropriés pour exécuter les étapes selon les revendications 1 à 13, lorsque ledit programme est exécuté sur un ordinateur.

FIG. 1

**20.**
Acquire current position data

**21.**
μ (adherence coefficient) assignment

**22.**
**Vmax**
**Amin= -μ\*g**
**h**
**s**

**23.**
Acquire horizon data

**24.**
**STOP?**

YES →

**25. OUTPUT**
**V_1 = 0**
**L_1 = 0**
**Vmax**
**D_1**
**Amin**

NO

**26.**
**Downhill?**

YES →

**27. OUTPUT**
**V_1=Speed limit**
**L_1**
**Vmax**
**D_1**
**Amin**

NO

**28.**
**Speed limit**
**< V?**

YES →

**29. OUTPUT**
**V_1=Speed limit**
**L_1**
**Vmax**
**D_1**
**Amin**

NO

**GO TO 50.**

**30. OUTPUT**
**V_1=N.A.**
**L_1=N.A.**
**Vmax**
**D_1**
**Amin**

FIG. 2

FIG .3

FIG .4

FIG. 5

**EP 2 516 233 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008206070 A
- WO 2009010199 A
- WO 2006071170 A